# EUROPÄISCHE PATENTANMELDUNG

(11) **EP 2 218 974 A2**
(43) Veröffentlichungstag der Anmeldung: **18.08.2010**
(21) Anmeldenummer: 10090002.6
(22) Anmeldetag: 03.02.2010
(51) Int. Cl.: F24D 19/06

(54) **Heizköper mit Lüfterbaugruppe**

(30) Priorität: 13.02.2009 DE 202009002307 U
(71) Anmelder: KERMI GmbH, 94447 Plattling (DE)
(72) Erfinder: Harald Fonfara, 94551 Lalling (DE); Herbert Göstl, 94227 Zwiesel (DE)
(74) Vertreter: Patentanwälte Bressel und Partner

(57) **Zusammenfassung**

Heizkörper mit mindestens einer dem Raum zugerichteten und von einem Heizmedium durchströmten Heizplatte (2), einer oberen Abdeckung und/oder Seitenblenden (3) zur Bildung einer Heizkörperumhausung sowie einer mindestens einen Ventilator (4.1) aufweisenden Lüfterbaugruppe (4), wobei der Ventilator (4.1) der Lüfterbaugruppe (4) mit einem Luftleitsystem (4.2) verbunden ist, welches den vom Ventilator (4.1) erzeugten Luftstrom aufnimmt und innerhalb der Heizkörperumhausung horizontal und/oder vertikal verteilt.

## Beschreibung

Die Erfindung betrifft einen Heizkörper mit mindestens einer dem Raum zugerichteten und von einem Heizmedium durchströmten Heizplatte, einer oberen Abdeckung und/oder Seitenblenden zur Bildung einer Heizkörperumhausung sowie einer mindestens einen Ventilator aufweisenden Lüfterbaugruppe.

Heizkörper mit freier Konvektion sind vor allem bei niedrigen Vorlauftemperaturen, die derzeit durch die Nutzung regenerativer Energien eine zunehmende Marktbedeutung erfahren, durch einen rapiden Abfall der Heizleistung gekennzeichnet. Um dem zu begegnen, werden Heizkörper mit zuschaltbaren Lüftern ausgestattet. Dabei werden die Lüfter je nach Bauart unter- oder oberhalb der Heizflächen angeordnet, was stets zu dem Nachteil führt, dass die Heizleistung ohne Lüfterunterstützung noch niedriger wird, da die Bauteile des abgeschalteten Lüfters die Durchströmung des Heizkörpers erheblich stören. Infolge dessen müssen die Lüfter bereits bei Leistungsanforderungen in Betrieb sein, bei denen der nicht mit einem Lüfter unterstützte Heizkörper noch eine ausreichend Leistung hätte. Derartige Heizkörper sind aus dem Stand der Technik hinlänglich bekannt und sind beispielsweise in den Druckschriften DE 29 45 083, DE 29 35 735 A1, DE 198 34 269C2, DE 198 34 270C2, DE-OS 24 03 127 sowie DE 82 25 121 U1 beschrieben.

Die Aufgabe der vorliegenden Erfindung besteht darin, einen Heizkörper mit einer Lüfterbaugruppe vorzustellen, der die o. g. Nachteile weitgehend überwindet. Insbesondere soll dabei ein Heizkörper zur Verfügung gestellt werden, dessen integrierte Lüfterbaugruppe die freie Konvektion durch den Heizkörper bei abgeschalteten Ventilator nicht oder zumindest nur geringfügig beeinflusst und bei eingeschaltetem Ventilator der gesamte vom Ventilator erzeugte Luftstrom gezielt durch den Heizkörper geführt wird. Luftströme an den Konvektionsflächen des Heizkörpers vorbei sollen dabei möglichst unterbunden werden.

Erfindungsgemäß wird diese Aufgabe durch die Merkmale des Anspruchs 1 gelöst. Vorteilhafte Weiterbildungen der Erfindung sind in den zugehörigen Ansprüchen enthalten. Demnach beinhaltet die Erfindung einen Heizkörper mit mindestens einer dem Raum zugerichteten und von einem Heizmedium durchströmten Heizplatte, einer oberen Abdeckung und/oder Seitenblenden zur Bildung einer Heizkörperumhausung sowie einer mindestens einen Ventilator aufweisenden Lüfterbaugruppe, wobei der Ventilator der Lüfterbaugruppe mit einem Luftleitsystem verbunden ist, welches den vom Ventilator erzeugten Luftstrom aufnimmt und innerhalb der Heizkörperumhausung horizontal und/oder vertikal verteilt.
Vorteilhaft sind dazu hinter bzw. zwischen den Heizplatten Konvektorbleche vorgesehen, wobei der Ventilator der Lüfterbaugruppe im unteren Bereich mindestens einer der Seitenblenden und unterhalb der Konvektorbleche angeordnet ist. Bevorzugt ist der Ventilator als Radial- oder Axialventilator ausgebildet.
Nach einem besonderen Merkmal der Erfindung besteht das Luftleitsystem aus einem Schlauch aus einem flexiblen Gewebe, der horizontal im unteren Bereich des Heizkörpers unterhalb der Konvektorbleche angeordnet ist. Durch die erfindungsgemäße Anordnung kann die Formänderung des Schlauches zur Abdichtung oder Freigabe von Konvektionsschächten eines Heizkörpers genutzt werden.

Vorteilhaft ist der Schlauch dabei an einem nach oben weisenden Abschnitt der Umfangsfläche luftdurchlässig, vorzugsweise perforiert ausgebildet und an einem nach unten weisenden Abschnitt der Umfangsfläche luftdicht, vorzugsweise beschichtet. Die dem Ventilator gegenüberliegende Seite des Schlauchs ist nach einem weiteren Merkmal luftdicht verschlossen.
Nach einem anderen Merkmal ist vorgesehen, dass der Schlauch an seiner höchsten Stelle linienförmig entlang der Heizkörperlängserstreckung unterhalb der Konvektorbleche befestigt ist.
Nach einem weiteren besonderen Merkmal der Erfindung ist besteht das Luftleitsystem aus einer hohlen Drehachse und mindestens einem daran anschließenden hohlen Drehflügel mit tangential angeordneten Luftaustrittsöffnungen, welches über die Längsachse des Heizkörpers unterhalb der Konvektorbleche angeordnet ist.
Nach einer weiteren Variante der Erfindung besteht das Luftleitsystem aus einem mit einer Drehachse verbundenen Drehflügel, der mindestens einen die Fläche des Drehflügels durchsetzenden Ventilator aufweist. Die Drehachse ist dabei beidseitig in den Seitenblenden drehbar gelagert. Bei Betrieb der Ventilatoren sorgt der Impuls der erzeugten Luftströmung dafür, dass der Drehflügel aus der Ruhestellung in die Gebrauchsstellung dreht und den freien Konvektionsquerschnitt versperrt. Nach Abschalten der Ventilatoren dreht sich der Drehflügel von selbst, z.B. mittels eines Hilfsgewichtes oder einer Torsionsfeder wieder in die Ruhelage zurück.

Nachfolgend wird die Erfindung anhand von in Zeichnungen dargestellten Ausführungsbeispielen beschrieben.

### Es zeigen:

Fig. 1 eine Variante des erfindungsgemäßen Heizkörpers,
Fig. 2 den Heizkörper nach Fig. 1 von hinten,
Fig. 3 eine Seitenansicht eines erfindungsgemäßen Heizkörpers,
Fig. 4 den Heizkörper nach Fig. 1 von hinten,
Fig. 5 eine Seitenansicht des erfindungsgemäßen Heizkörpers nach Fig. 1,
Fig. 6 eine Detailansicht des Heizkörpers nach Fig. 1 mit Luftleitsystem,
Fig. 7 eine weitere Variante des erfindungsgemäßen Heizkörpers,
Fig. 8 den Heizkörper nach Fig. 7 von hinten und in Schnittdarstellung,
Fig. 9 eine perspektivische Ansicht des Heizkörpers nach Fig. 7 von hinten,
Fig. 10 eine weitere perspektivische Ansicht des Heizkörpers nach Fig. 7 von hinten,
Fig. 11 den Heizkörper nach Fig. 7 von hinten,
Fig. 12 eine Seitenansicht des erfindungsgemäßen Heizkörpers nach Fig. 7.
Fig. 13 eine weitere Variante des erfindungsgemäßen Heizkörpers von hinten (Ruhestellung),
Fig. 14 den Heizkörper nach Fig. 13 von hinten (Gebrauchsstellung),
Fig. 15 eine Detailansicht des Heizkörpers nach Fig. 13 mit Luftleitsystem (Ruhestellung),
Fig. 16 eine Detailansicht des Heizkörpers nach Fig. 13 mit Luftleitsystem (Gebrauchsstellung),
Fig. 17 eine perspektivische Seitenansicht (Gebrauchsstellung),des erfindungsgemäßen Heizkörpers nach Fig. 13.

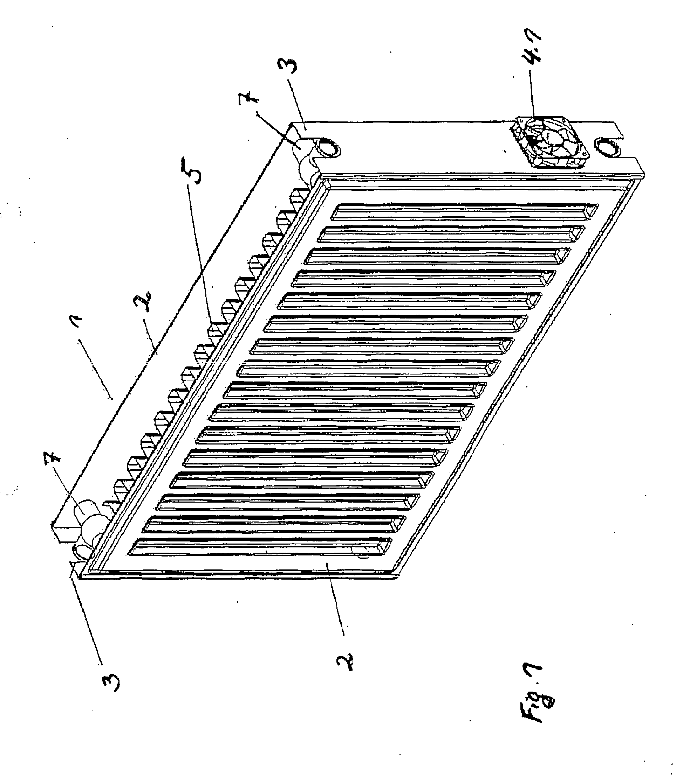

Fig. 1 zeigt einen Heizkörper 1 mit einer dem Raum zugerichteten und von einem Heizmedium durchströmten Heizplatte 2 und Seitenblenden 3 zur Bildung einer Heizkörperumhausung sowie eine einen Ventilator 4.1 aufweisende Lüfterbaugruppe 4. Eine hintere weitere Heizplatte 2 ist nur angedeutet. Es ist auch möglich, dass der Heizkörper nur eine in den Raum gerichtete Heizplatte aufweist. Die Verbindungsstücke 7 dienen zum Anschluss an den Vor- und Rücklauf des Heizungssystems sowie zur gezielten Führung der Strömung des Heizmedium im Heizkörper zwischen den Heizplatten sowie zur Aufnahme von Anschlusstücken für ein Thermostatventil und/oder von Entlüftungsventilen. Auf deren genaue Funktion wird hier aber nicht weiter eingegangen, da dies für die vorliegende Erfindung nicht wesentlich ist. Hinter bzw. zwischen den Heizplatten 2 sind Konvektorbleche 5 vorgesehen.
Der Ventilator 4.1 der Lüfterbaugruppe 4 ist im unteren Bereich der Seitenblenden 3 und unterhalb der Konvektorbleche 5 angeordnet und ist als Radial- oder Axialventilator ausgebildet.

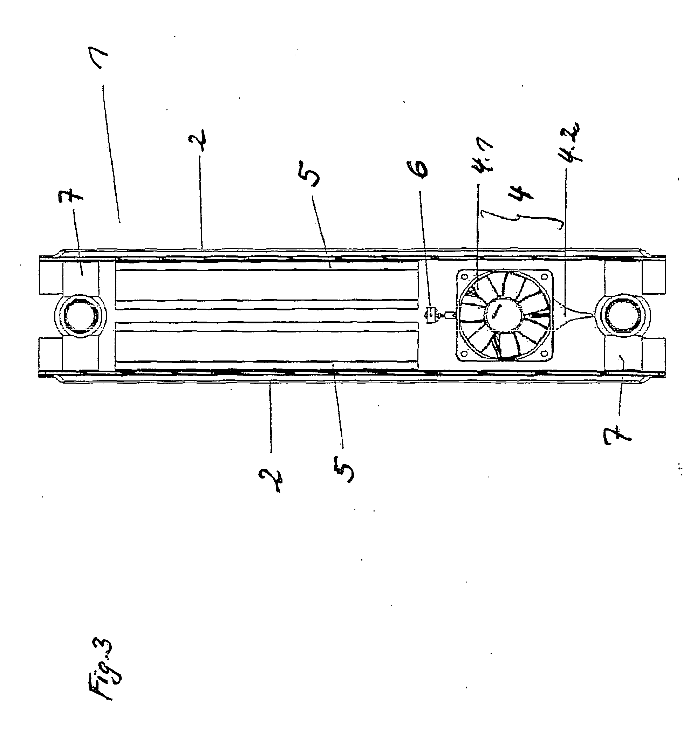

Das Luftleitsystem 4.2 der Lüfterbaugruppe 4 besteht nach der in den Fig. 1 bis 3 dargestellten Ausführungsvariante der Erfindung aus einem Schlauch aus einem flexiblen Gewebe, welcher horizontal im unteren Bereich Heizkörpers unterhalb der Konvektorbleche 5 angeordnet ist. In der Fig. 3 wird ein Heizkörper in der Seitenansicht mit zwei Heizplatten 2 und zwei Reihen von Konvektorblechen 5 gezeigt.

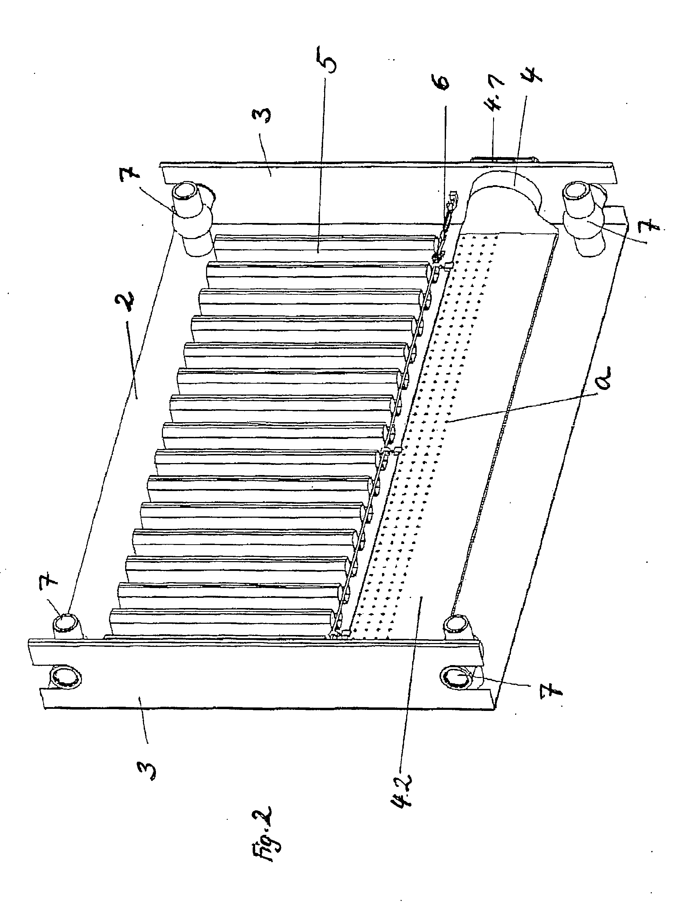

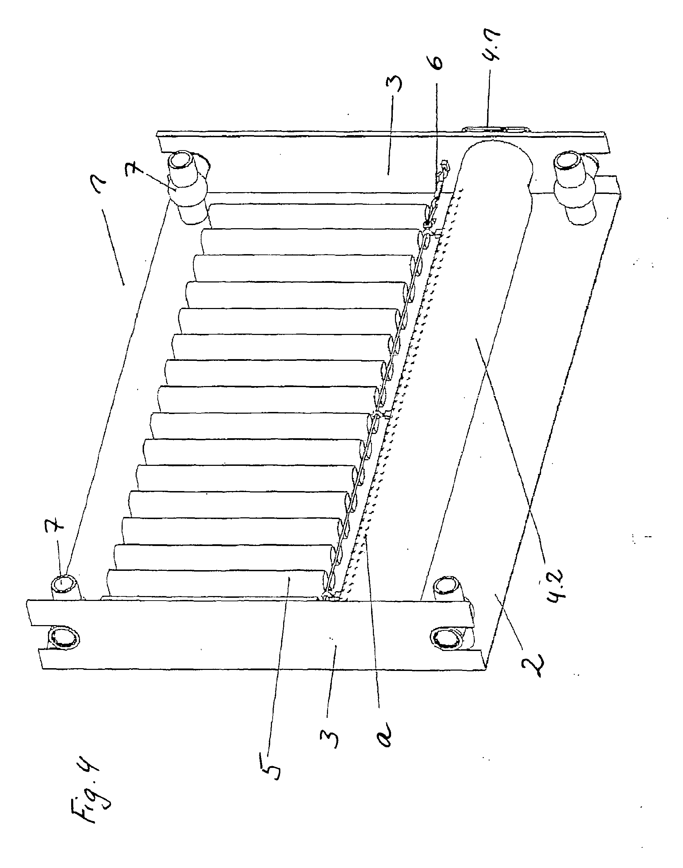

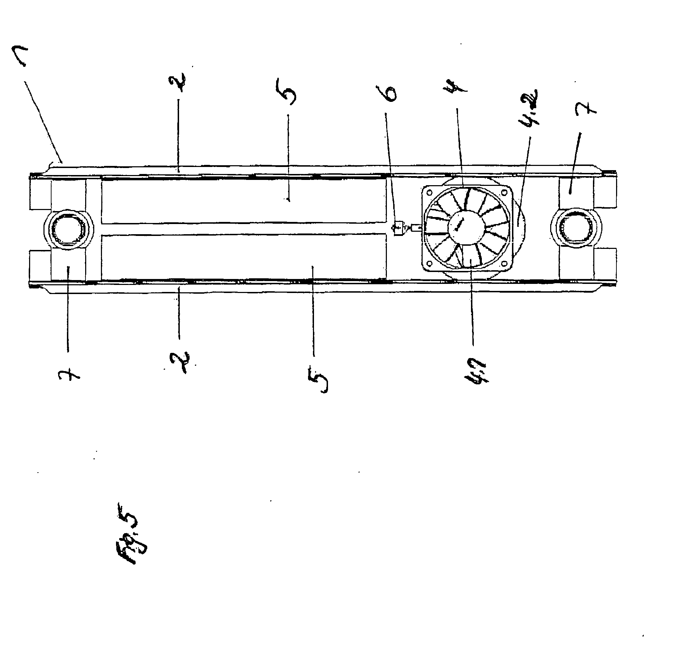

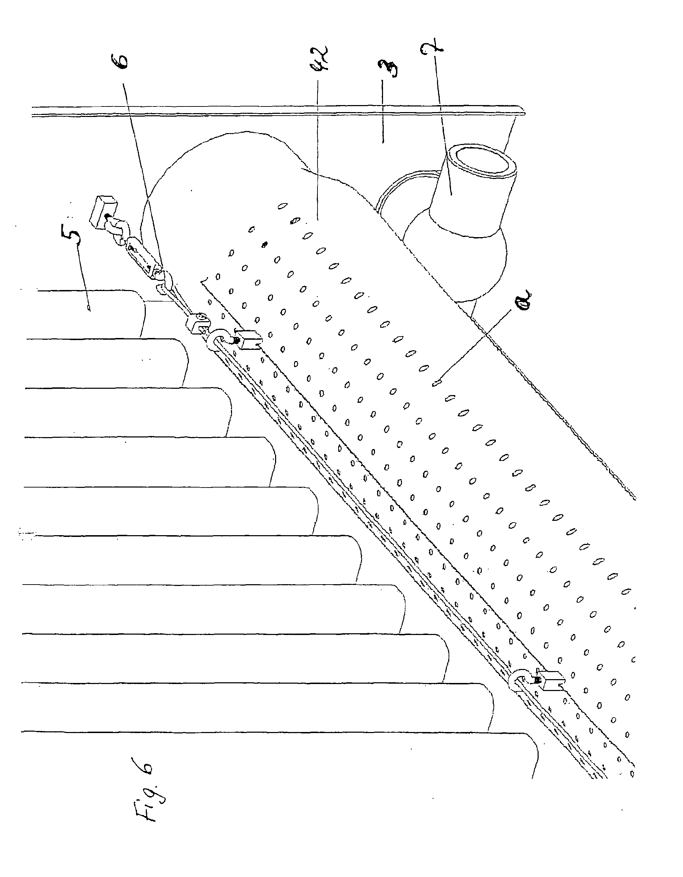

Der Schlauch ist am nach oben weisenden Abschnitt der Umfangsfläche luftdurchlässig, d.h. durch die Luftaustrittsöffnungen a perforiert ausgebildet, während er am nach unten weisenden Abschnitt der Umfangsfläche durch eine geeignete Beschichtung luftdicht ist. Die dem Ventilator 4.1 gegenüberliegende Seite des Schlauchs ist luftdicht verschlossen. Der Schlauch ist an seiner höchsten Stelle linienförmig entlang der Heizkörperlängserstreckung unterhalb der Konvektorbleche 5 an einer Seilkonstruktion 6 befestigt. Die Luftunterstützung erfolgt durch den seitlich am Heizkörper angeordneten Radial- oder Axialventilator, der in den längs unter dem Heizkörper verlaufenden Schlauch aus einem flexiblen Gewebe bläst. Bei Nichtbetrieb (Ruhestellung) des Ventilators hängt der Schlauch im Heizkörper, ohne den Strom der Luft für die freie Konvektion zu stören (Fig. 2 und 3). Wird der Ventilator 4.1 wegen erhöhten Leitungsbedarfs eingeschaltet, so bläst sich der Schlauch 4.2 aufgrund der Ventilatorpressung auf, dichtet damit die untere Anströmebene weitgehend nach unten ab und zwingt die Luft aus dem Ventilator nach oben durch die Konvektionsschächte (Fig. 4 und 5). In der Fig. 6 ist in einer Detailansicht ein als Luftleitsystem 4.2 verwendeter und vom Ventilator 4.1 aufgeblasener Schlauch mit Luftaustrittsöffnungen a im oberen Bereich seiner Umfangsfläche dargestellt. Bei verringerter Leistung des Ventilators sind auch Zwischenstellungen mit teilweise geschlossener Luft von unter und einer nach dem Venturiprinzip leicht beschleunigten Luftströmung in den Konvektionsschächten möglich. Hier können über die Formgebung des Schlauches sowie durch gezielte Perforation beliebige Anpassungen an die gewünschte Kennlinie erfolgen.

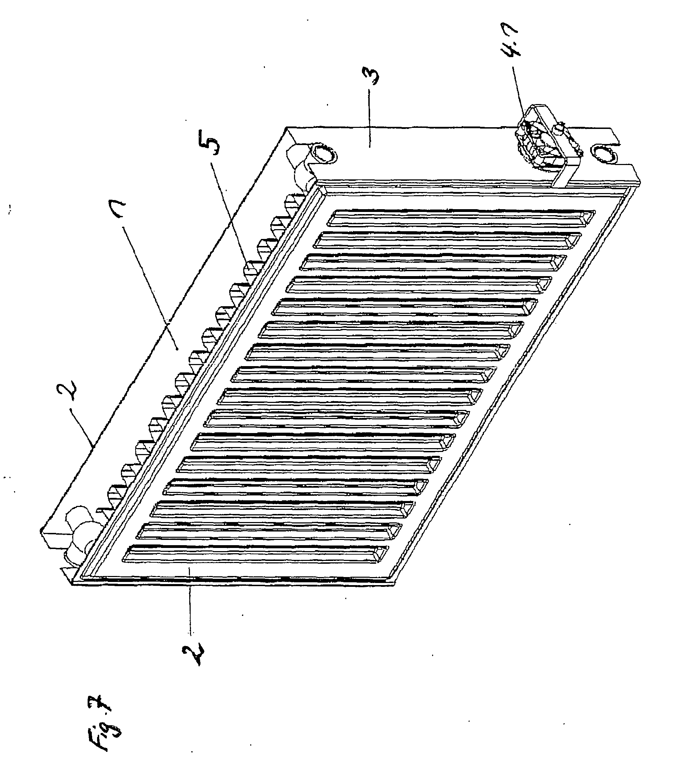

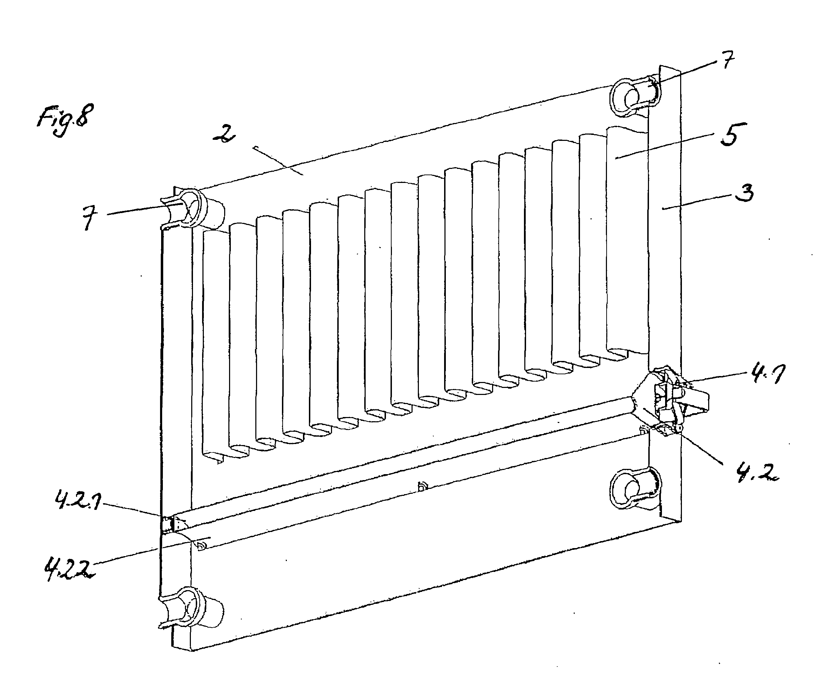

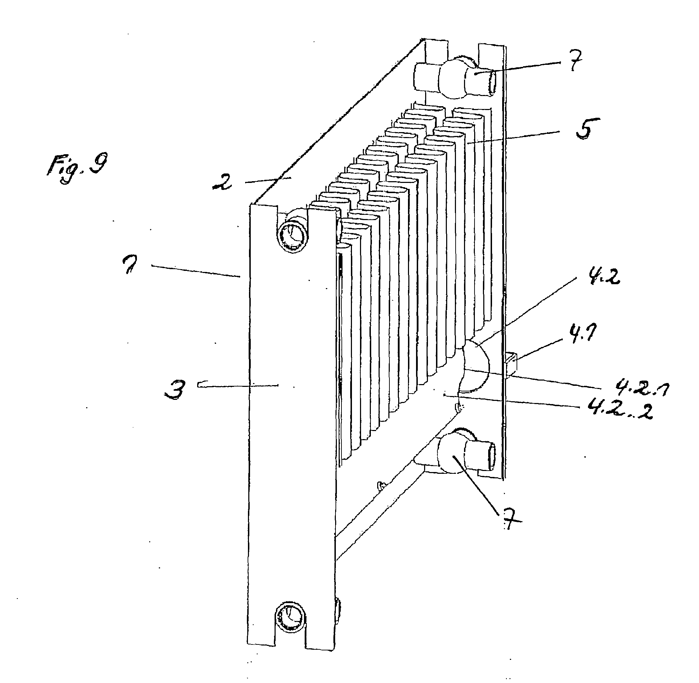

In den Fig. 7 bis 12 ist eine weitere Variante der Erfindung dargestellt. Das Luftleitsystem 4.2 besteht bei dieser Variante aus einer hohlen Drehachse 4.2.1 und einem daran anschließenden hohlen Drehflügel 4.2.2 mit tangential angeordneten Luftaustrittsöffnungen
a. Deutlich wird dies insbesondere in der in Fig. 8 gezeigten Schnittdarstellung. Drehachse 4.2.1 und Drehflügel 4.2.2 sind dabei über die Längsachse des Heizkörpers 1 unterhalb der Konvektorbleche 1 angeordnet (Fig. 9).

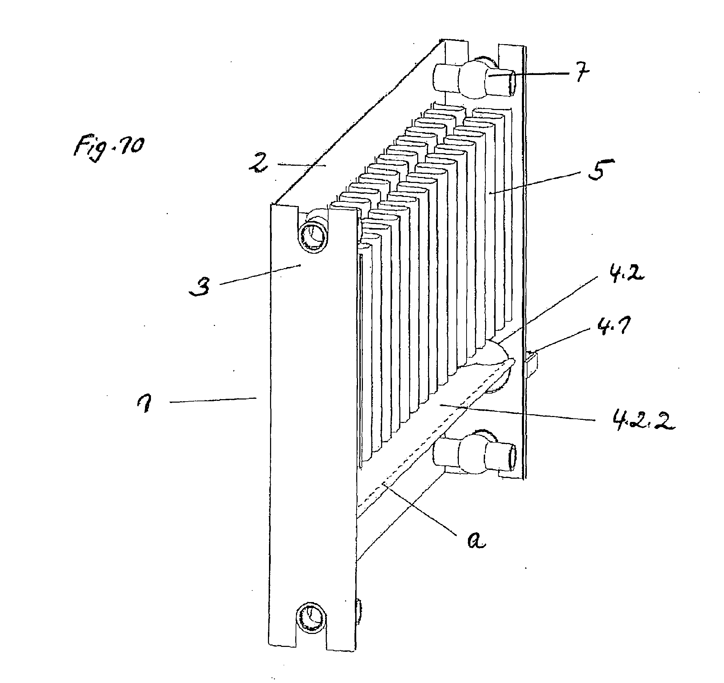

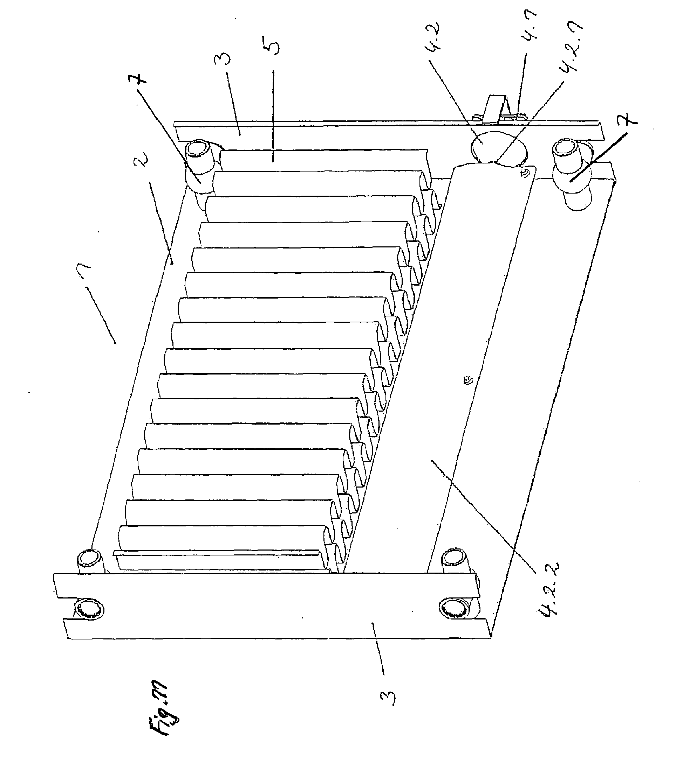

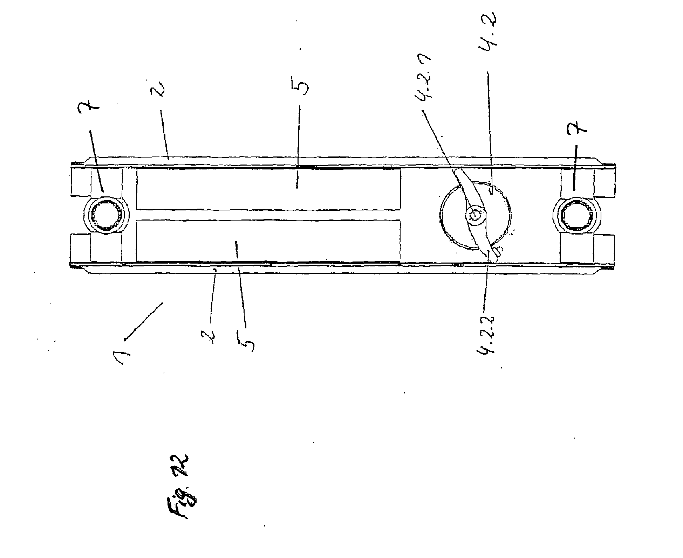

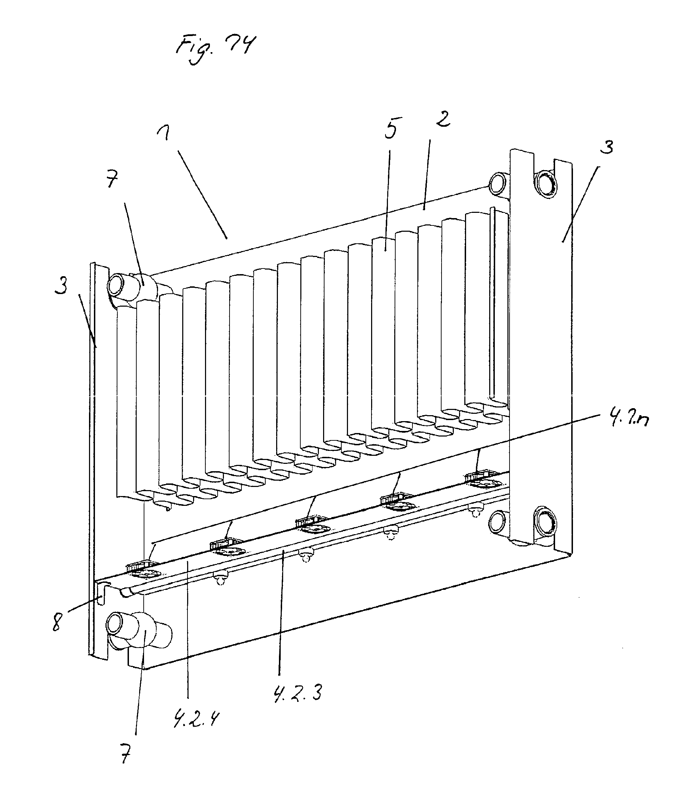

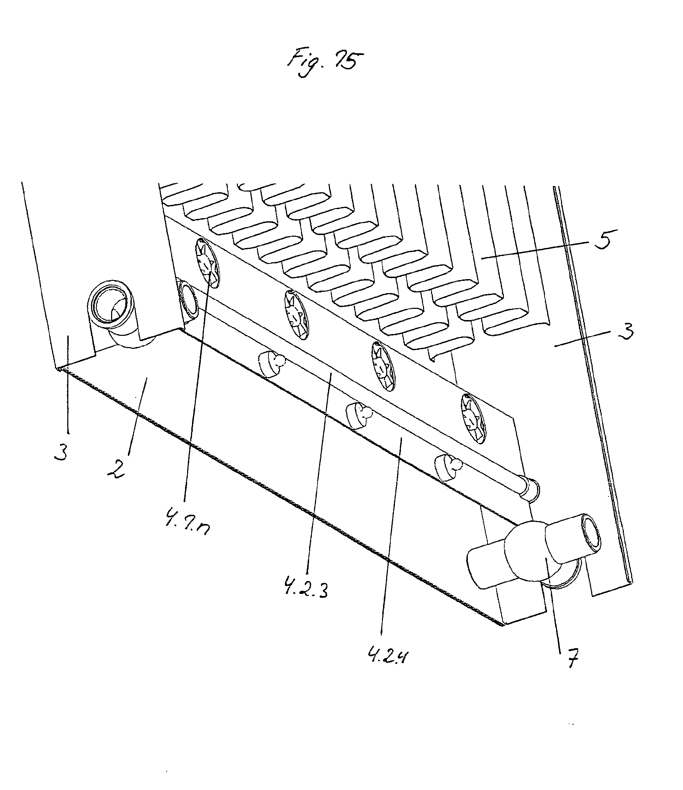

Wird nun in die Drehachse durch den Ventilator Luft eingeblasen, so wird über den Rückstoß an den Austrittsöffnungen ein Drehmoment erzeugt, das den Drehflügel von einer Ruhestellung in eine Gebrauchsstellung schwenkt (Fig. 10). In Ruhestellung (Fig. 9 und 11) ist der freie Konvektionsquerschnitt unter dem Heizkörper nahezu ungestört. In Gebrauchsstellung dagegen ist der freie Konvektionsquerschnitt versperrt, um falsche Luftströmungen zu verhindern. In der in Fig. 12 gezeigten Seitenansicht fehlen die Seitenbleche und der Ventilator 4.1 um eine bessere Sicht auf das Luftleitsystem zu ermöglichen. Durch den Drehflügel 4.2.2 ist hier ebenfalls der freie Konvektionsquerschnitt versperrt.

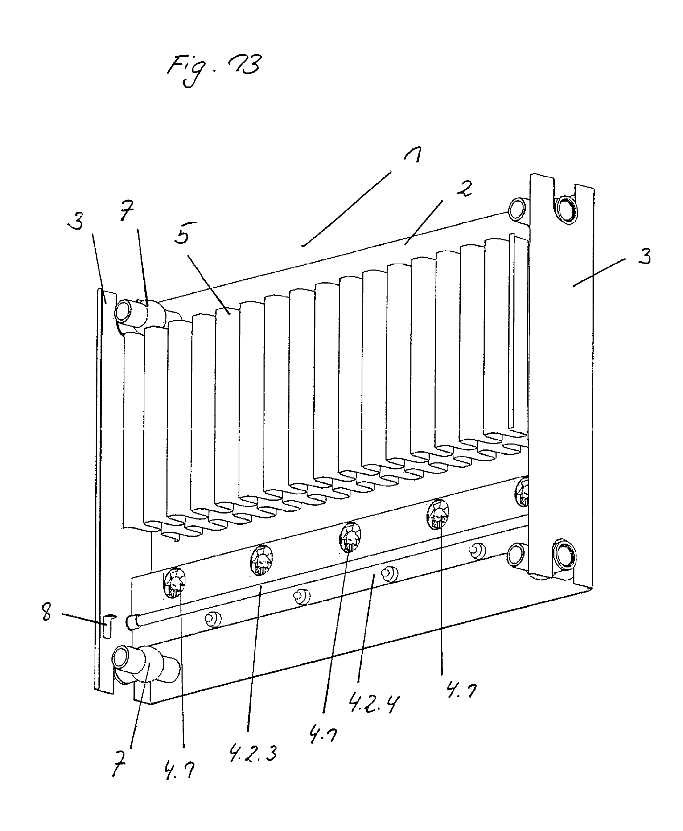

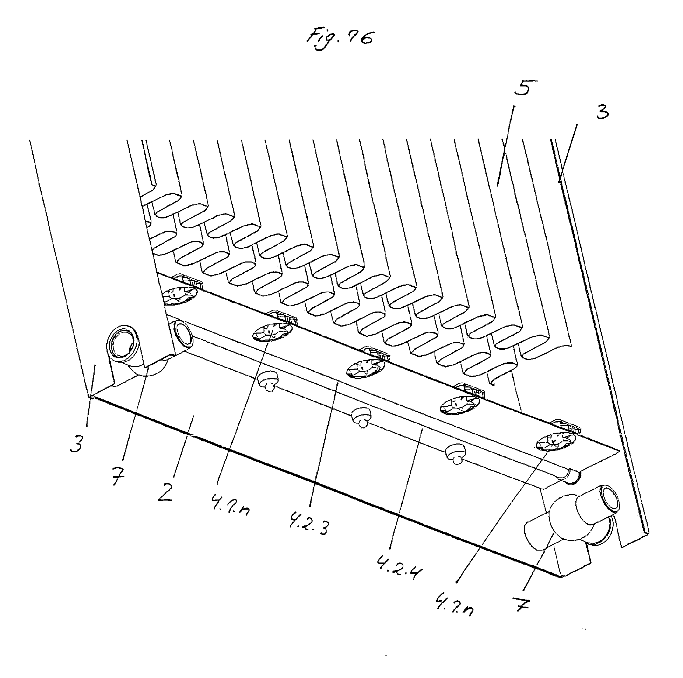

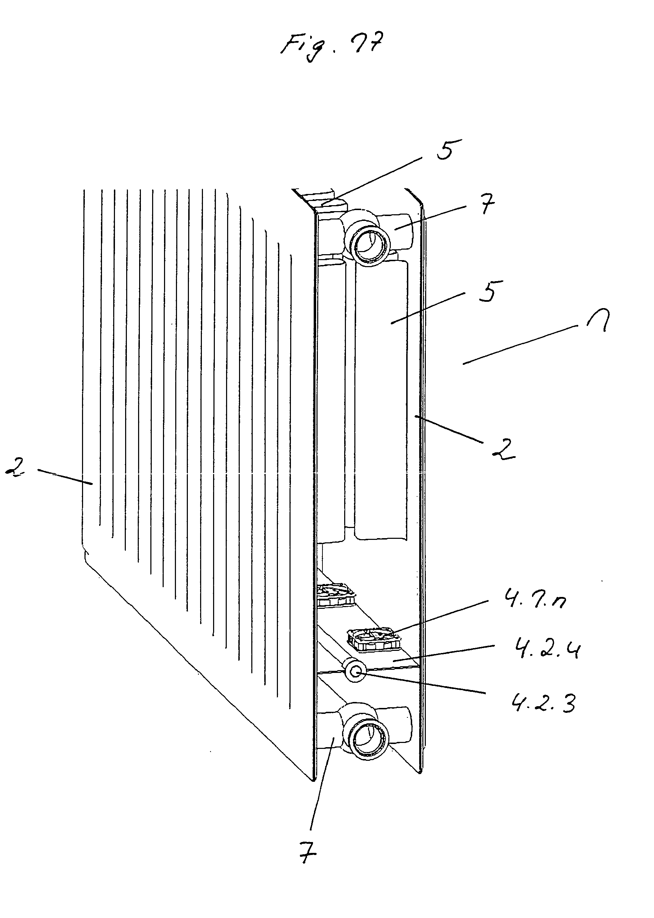

In den Fig. 13 bis 17 ist eine weitere Variante der Erfindung dargestellt. Das Luftleitsystem 4.2 besteht hier aus einem mit einer Drehachse 4.2.3 verbundenen Drehflügel 4.2.4, wobei die Drehachse 4.2.3 beidseitig in den Seitenblenden 3 drehbar gelagert ist. Vorteilhaft sind in die Fläche des Drehflügels 4.2.4 mehrere voneinander beabstandete kleine Ventilator 4.1n eingelassen.
In der Ruhestellung (Fig. 13 und 15) steht der Drehflügel 4.2.4 vertikal. Der freie Konvektionsquerschnitt ist somit ungestört. Bei Betrieb der Ventilatoren 4.1.n sorgt der Impuls der erzeugten Luftströmung dafür, dass der Drehflügel 4.2.4 aus der Ruhestellung in die Gebrauchsstellung dreht und den freien Konvektionsquerschnitt versperrt. Dies ist deutlich in den Fig. 14, 16 und 17 erkennbar. An den Seitenblenden 3 angeordnete Bügel 8 sorgen dabei für ein Verharren des Drehflügels 4.2.4 in der horizontalen Gebrauchsstellung. Nach Abschalten der Ventilatoren 4.1.n dreht sich der Drehflügel 4.2.4 mittels geeigneter Hilfsmittel (nicht dargestellt) wie beispielsweise Hilfsgewichte oder einer Torsionsfeder wieder in die Ruhelage zurück.

## Patentansprüche

1. Heizkörper mit mindestens einer dem Raum zugerichteten und von einem Heizmedium durchströmten Heizplatte (2), einer oberen Abdeckung und/oder Seitenblenden (3) zur Bildung einer Heizkörperumhausung sowie einer mindestens einen Ventilator (4.1) aufweisenden Lüfterbaugruppe (4), **dadurch gekennzeichnet, dass** der Ventilator (4.1) der Lüfterbaugruppe (4) mit einem Luftleitsystem (4.2) verbunden ist, welches den vom Ventilator (4.1) erzeugten Luftstrom aufnimmt und innerhalb der Heizkörperumhausung horizontal und/oder vertikal verteilt.

2. Heizkörper nach Anspruch 1, **dadurch gekennzeichnet, dass** hinter bzw. zwischen den Heizplatten (2) Konvektorbleche (5) vorgesehen sind.

3. Heizkörper nach den Ansprüchen 1 und 2, **dadurch gekennzeichnet, dass** der Ventilator (4.1) als Radial- oder Axialventilator ausgebildet ist.

4. Heizkörper nach den Ansprüchen 1 bis 3, **dadurch gekennzeichnet, dass** der Ventilator (4.1) der Lüfterbaugruppe (4) im unteren Bereich mindestens einer der Seitenblenden (3) und unterhalb der Konvektorbleche (5) angeordnet ist.

5. Heizkörper nach den Ansprüchen 1 bis 4, **dadurch gekennzeichnet, dass** das Luftleitsystem (4.2) aus einem Schlauch aus einem flexiblen Gewebe besteht, welcher horizontal im unteren Bereich Heizkörpers (1) unterhalb der Konvektorbleche (5) angeordnet ist.

6. Heizkörper nach Anspruch 5, **dadurch gekennzeichnet, dass** der Schlauch an einem nach oben weisenden Abschnitt der Umfangsfläche luftdurchlässig, vorzugsweise perforiert ist und Luftaustrittsöffnungen (a) aufweist und an einem nach unten weisenden Abschnitt der Umfangsfläche luftdicht, vorzugsweise beschichtet ist.

7. Heizkörper nach den Ansprüchen 5 und 6, **dadurch gekennzeichnet, dass** die dem Ventilator (4.1) gegenüberliegende Seite des Schlauchs luftdicht verschlossen ist.

8. Heizkörper nach den Ansprüchen 5 bis 7, **dadurch gekennzeichnet, dass** der Schlauch an seiner höchsten Stelle linienförmig entlang der Heizkörperlängserstreckung unterhalb der Konvektorbleche (5) befestigt ist.

9. Heizkörper nach den Ansprüchen 1 bis 4, **dadurch gekennzeichnet, dass** das Luftleitsystem (4.2) aus einer hohlen Drehachse (4.2.1) und mindestens einem daran anschließenden hohlen Drehflügel (4.2.2) mit tangential angeordneten Luftaustrittsöffnungen
(a) besteht und über die Längsachse des Heizkörpers (1) unterhalb der Konvektorbleche (5) angeordnet sind.

10. Heizkörper nach den Ansprüchen 1 bis 3, **dadurch gekennzeichnet, dass** das Luftleitsystem (4.2) aus einem mit einer Drehachse (4.2.3) verbundenen Drehflügel (4.2.4) besteht und die Drehachse (4.2.3) beidseitig in den Seitenblenden (3) drehbar gelagert ist, wobei mindestens ein Ventilator (4.1) in der Fläche des Drehflügel (4.2.4) integriert ist.
